# EUROPEAN PATENT SPECIFICATION

(11) **EP 1 863 202 B1**
(45) Date of publication and mention of the grant of the patent: **09.09.2009**
(21) Application number: 07109027.8
(22) Date of filing: 28.05.2007
(51) Int. Cl.: H04B 10/08, H04J 14/02

(54) **An optical transmission system with gain adjustment**
Optisches Übertragungssystem mit Gewinnanpassung
Système de transmission optique avec réglage de gain

(30) Priority: 30.05.2006 FR 0651957
(43) Date of publication of application: 05.12.2007
(73) Proprietor: Alcatel Lucent, 75008 Paris (FR)
(72) Inventor: Bisson, Arnaud, 75014 Paris (FR); Ougier, Christophe, 92160, ANTONY (FR); Soigne, Jean-Philippe, 92160, ANTONY (FR)
(74) Representative: Smith, Bradford Lee

(56) References cited:
- EP-A- 1 355 141
- WO-A2-01/86838

## Description

The present invention relates to an optical transmission system with wavelength division multiplexing.

Optical transmission systems making use of wavelength division multiplexing (WDM) are known. Such systems consist in using a plurality of transmission channels on a common optical fiber, with the channels being distinguished from one another by their respective wavelengths.

A conventional WDM transmission system comprises a plurality of transponders adapted to emit optical signals at given wavelengths. A multiplexer is located at the inlet of the transmission line. The multiplexer is adapted to unite within a single fiber the optical signals coming from the various optical sources, each source operating at its own frequency. Each optical signal emitted at a given wavelength constitutes one of the channels of the transmission line, e.g. a monomode optical fiber; the set of optical signals propagating at the given wavelengths constitutes a multiplex. The transmission line generally includes a plurality of repeaters located at regular intervals along the line. The function of a repeater is to amplify, and possibly also to reshape, a signal that is conveyed over a long distance. Thus, a repeater generally comprises an optical amplifier adapted to amplify all of the channels of the conveyed optical signal. In-line amplification often introduces or accentuates distortion between the power levels of the signals propagating in the various channels of the transmission line.

A repeater may also include other optical components, such as a chromatic dispersion compensator and/or a gain equalizer, e.g. a dynamic or a static filter, or a variable optical attenuator, for compensating the distortions in power levels between the channels.

An optical transmission line may also include one or more optical nodes. The term "optical node" is used to designate a point of the WDM transmission line where the optical signal is demultiplexed for optical processing prior to being remultiplexed for forwarding downstream from the node of the WDM line. The multiplex may be modified at the optical node by adding, extracting, or extinguishing one or more transmission channels. The optical node may comprise an optical add-and-drop multiplexer (OADM) adapted to add or drop optical channels to or from the line; an optical node may also include one (or more) optical amplifier(s) and a gain equalizer, or indeed other components depending on the application.

Thus, in the context of a WDM transmission line, the optical nodes for initiating or extinguishing channels can give rise to variations in the total optical power of the signal conveyed by the multiplex as a whole; an interruption in the fiber can produce the same effect. These variations of power can degrade the performance of amplifiers distributed along the line, which amplifiers are generally designed to operate with some nominal level of optical power being input thereto.

The quality of optical transmission over a WDM line can be measured in terms of bit error rate (BER). This rate is representative of the proportion of bits that are received erroneously compared with the total number of received bits. For optical transmission applications, the acceptable limit for the number of erroneous bits amongst all of the information bits conveyed by the line is generally set at 10⁻¹³, possibly after correction by means of an algorithm based on forward error control (FEC). For a WDM transmission line, the BER needs to be verified for each channel of the transmission line.

Unfortunately, a degradation of the BER can appear when the optical power on a channel becomes too high, thus leading to non-linear effects in the transmission line. In contrast, if the power per channel decreases, then the BER can also be degraded because there is too little power at the receiver or because of a degraded optical signal-to-noise ratio (OSNR). It is therefore important to achieve effective control over differences in optical power on the various transmission channels of the line. Most of the effects that affect the value of the BER, and thus the quality of the line, can be compensated or improved by suitable control of the optical power.

Several methods are already known for controlling the optical power in a WDM transmission line.

One known method consists in performing in-line gain equalization in order to compensate for differences in amplification between the channels. Such gain equalization can be performed by a variable optical attenuator (VOA) disposed upstream from the in-line amplifier or between two amplifiers in cascade. Such an attenuator makes it possible to adjust the power of an optical signal by attenuating it to a desired value. That solution is used for compensating variations in line losses, but not for compensating variations in total power due to channels being added or lost in optical nodes. The VOA can be controlled by an optical power monitor (OPM) or an optical spectrum monitor (OSM) that measures the power in each of the channels output by the amplification stage and adjusts the VOA by a feedback loop, or more simply by using a photodiode to measure the total power.

Patent document EP-1 355 141 proposes a device that measures power loss variations in optical signal transmission lines provided with a supervisory channel, and dynamically compensates the effect on the primary signals of those variations.

Patent document FR-A-2 843 505 proposes measuring the input power to an amplification device and determining the number of channels at the input to the amplification device in order to modify the gain of the amplifier as a function of the determined number of channels. As mentioned above, the number of channels conveyed in the multiplex can vary and can affect the total power of the transmitted signal. Nevertheless, that solution is not very robust when faced with large variations in the number of channels, and it is relatively incompatible with song distance transmission requiring a large number of amplifiers.

It is also known form patent document US-6 697 397 to inject an additional channel into the multiplex, referred to as a load channel, with the power in that channel being controlled so as to adjust automatically the total power level. Such a channel is known as an automatic level control (ALC) channel; it is conveyed with the other channels of the multiplex but can carry no information. That document also proposes placing a bandpass optical filter on the light path of the ALC channel in order to eliminate the side lobes generated by the frequency drift of the high-power laser emitting the ALC channel or by the non-linear effects to which this high-power channel is subjected. In an optical node, this filter function is performed by the multiplexer and the demultiplexer constituting the OADM.

Adding an ALC load channel makes it possible to keep the total optical power substantially constant by adjusting the optical power of the ALC channel so as to deliver to an in-line optical amplifier a constant level of input power corresponding to its nominal operation. Nevertheless, when the multiplex contains only a small number of channels, e.g. because numerous channels have been dropped or lost, the power of the ALC load channel becomes very high and non-linear effects appear. In particular, the spectral width of the ALEC channel increases and spills over into the adjacent channels. This widening not only disturbs reception on the adjacent channel, but also disturbs measuring the power of the ALC channel, thereby reducing the effectiveness of the loop for automatically controlling power level. Furthermore, when the ALC channel goes through a filter, e.g. bandpass filter constituting the demultiplexer of an optical node of the WDM line, a fraction of the power in the ALC channel is filtered out, thereby reducing its power, and thus disturbing the effectiveness of the loop for controlling power level.

In order to mitigate those drawbacks, it is possible to envisage limiting the dynamic range of the ALC channel to avoid the power in said additional channel exceeding a given threshold beyond which non-linear effects are liable to appear. Nevertheless, reducing the dynamic range of the ALC channel reduces its effectiveness when the multiplex is made up of a small number of channels and/or limits its use to some larger minimum number of channels.

It is also possible to choose to eliminate the filter function on the ALC channel, but that solution can be applied only with point-to-point transmission including repeaters but no optical node, and in particular no OADMs, where the filter function is important on a dense WDM transmission line where the margins of the ALC channel are liable to severely disturb the optical processing of the working channels.

Thus, an object of the invention is to propose an improved system for adjusting the optical gain of the multiplex conveyed by a WDM line.

The invention proposes using the filter device that is generally already present in an optical node in order to refine the spectrum of the ALC channel. The power of the ALC channel is measured prior to filtering and its attenuation is adjusted to compensate for the power loss due to the filtering.

In particular, when the spectrum of the ALC channel is widened by non-linear effects, the filter function eliminates the margins of the spectrum that have spilled over into the adjacent channels. This loss of power due to filtering is compensated by smaller attenuation of the ALC channel. The smaller attenuation of the central zone of the spectrum of the ALC channel together with the filtering of the mergins thus amounts to defining the spectrum of the ALC channel and to correcting the non-linear effects introduced during transmission over the WDM line when the ALC channel presents high power.

More particularly, the invention provides an optical device for adjusting the gain of an ALC load channel conveyed in a multiplex over a transmission line by wavelength division multiplexing (WDM), the gain adjustment device comprising :
. a demultiplexer device having a filter device and adapted to receive a multiplex, and a multiplexer device adapted to forward a modified multiplex into the transmission line;
a measurement device measuring the optical power of the ALEC load channel and adapted to estimate optical power prior to filtering over a spectral band that is wider than the spectral band of the passband filter centered on each demultiplexed channel; and
a device for adjusting the power of the ALC load channel between the demultiplexer device and the multiplexes device, the power adjustment device being controller to compensate for the loss of power from the load channel on passing through the filter device.

In an embodiment, the device for measuring the optical power of the ALC load channel comprises at least one photodiode placed on the ALC load channel.

In another embodiment, the device for measuring the optical power of the ALC load channel comprises at least three photodiodes placed on ALC load channel and on the two channels adjacent to the load channel.

In another embodiment, the device for measuring the optical power of the ALC load channel comprises an optical spectrum analyzer (OSM) adapted to measure the spectral distribution of power in the received multiplex.

In an embodiment, the demultiplexer device comprises a bandpass filter applied to each channel for demultiplexing,

In an embodiment, the device for adjusting the power of the ALC load channel comprises a variable optical attenuator (VOA).

The invention also provides an optical system comprising: a WDM optical transmission line for conveying a wavelength division multiplex of optical signals, the multiplex comprising a plurality of channels for conveying optical signals and at least one additional load channel for automatic level control; and at least one optical node including at least one optical component for processing the signals of the multiplex and an optical device for adjusting the gain of the ALC load channel conveyed in the multiplex of the invention.

In another embodiment , the optical component for processing the signals of the multiplex in the optical node is selected from one (or more) optical amplifier (s); one (or more) optical attenuator(s); one (or more) optical filter(s); a chromatic dispersion compensator; and an add-and-drop optical multiplexer.

In an embodiment, the optical device for adjusting the gain of the ALC load channel is integrated in the optical component for processing the signals of the multiplex.

The invention also provides a method of adjusting gain in a wavelength division multiplex optical transmission system, the method comprising the steps of :
. transmitting a multiplex of wavelength division multiplexed optical signals, the multiplex comprising a plurality of channels conveying optical signals and at least one additional load channel for automatic level control ;
. demultiplexing said multiplex and multiplexing a modified multiplex for forwarding ;
. measuring or estimating the optical power of the ALC load channel prior to demultiplexing over a spectral band that is wider than the spectral band of the passband filter centered on each demultiplexed channel; and
· adjusting the power of the demultiplexed ALC load channel as a function of the power as measured or estimated prior to demultiplexing.

In an implementation, the optical power of the ALC load channel prior to filtering is estimated after demultiplexing by measuring the optical power of the load channel.

In another implementation, the optical power of the ALC load channel is estimated after demultiplexing by measuring the optical power of the load channel and of at least one of the two channels adjacent to the load channel.

In an implementation, the optical power of the ALC load channel is measured prior to demultiplexing by measuring the spectral distribution of power with an optical spectrum analyzer (OSM).

In an implementation, the power of the ALC load channel is adjusted by variable attenuation of the power of said load channel.

The features and advantages of the invention appear more clearly on reading the following description given by way of illustrative and non-limiting example, and made with reference to the accompanying figures, in which:
· Figure 1 is a diagram of a gain adjustment device in a first embodiment of the invention;
· Figure 2 is a diagram of a gain adjustment device in a second embodiment of the invention; and
· Figure 3 is a diagrammatic graph showing the spectral distribution of power about the ALC load channel.

The invention proposes an optical gain adjustment system in a WDM transmission line. Such a system comprises a device for adjusting the gain of a load channel ALC that is conveyed in the multiplex on a WDM transmission line. Such a device may be inserted at an optical node and it comprises a demultiplexer and a multiplexer coupled together to enable channels to be dropped and added or else to be forwarded in transparent manner. The demultiplexer device comprises a filter device, e.g. a bandpass filter centered on each demultiplexed channel. The device of the invention also comprises a measurement device adapted to estimate the optical power of the ALC load channel prior to filtering, and a device for adjusting the power of the ALC load channel that is controlled so as to compensate for the power lost from the load channel on passing through the filter device. The gain adjustment device of the invention thus makes it possible to improve the effectiveness of the load channel conveyed in a WDM line for the purpose of guaranteeing that the total optical power of the multiplex is kept constant.

In the description below, the terms "downstream" and "upstream" are used with respect to the propagation direction of the optical signal in the WDM transmission line relative to an optical node.

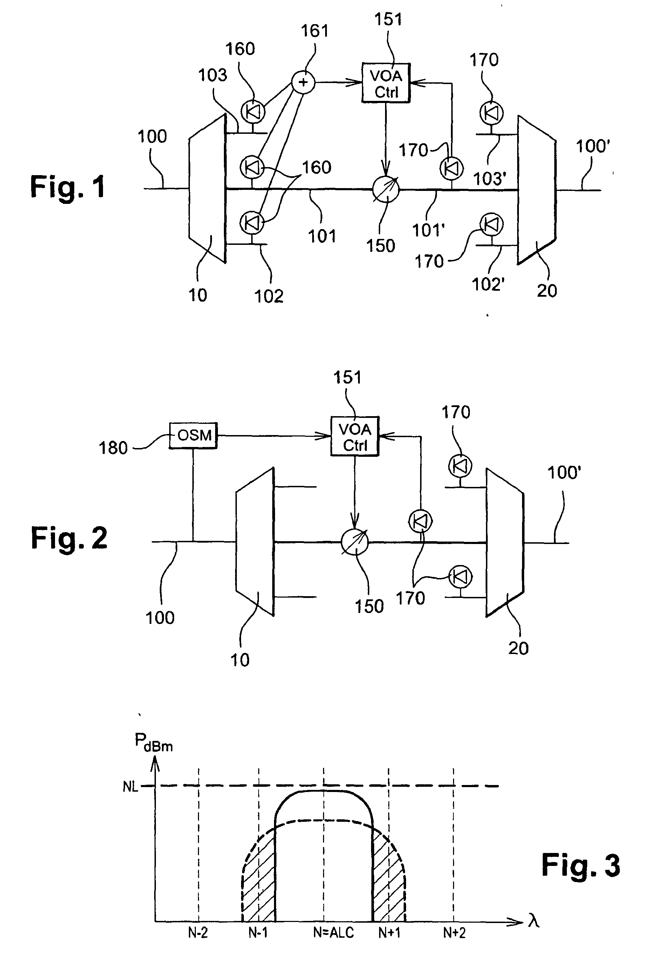

The device for adjusting the gain of the ALC load channel in accordance with the invention is described in greater detail below with reference to the embodiments of Figures 1 and 2. Figures 1 and 2 show only those elements that are necessary for understanding the invention, however it should be understood that the optical node includes one or more components for processing the optical signal of the multiplex associated with the device of the invention for adjusting the gain of the ALC load channel.

Figure 1 shows an optical device inserted in an optical node on a WDM transmission line receiving as input a multiplex 100 and outputting a modified multiplex 100' downstream from the node in the WDM line on a second segment of fiber. Figure 1 shows a demultiplexer device 10 receiving the multiplex 100 and a multiplexer device 20 outputting the modified multiplex 100' downstream from the node into the transmission line. In Figure 1, only three ports are shown on the demultiplexer and multiplexer devices 10 and 20, and they correspond to the optical channels reserved for the ALC load channel, namely the ALC channel and the two adjacent channels. It should be understood that the demultiplexer processes all or a fraction of the channels of the multiplex, with the "working" optical channels as demultiplexed in this way being potentially amplified, compensated for chromatic dispersion, adjusted in power, or otherwise, in known manner in parallel with the processing of the load channel constituting the subject matter of the invention.

In known manner, the demultiplexer device 10 filters the channels for demultiplexing. The filter device is generally constituted by a series of bandpass filters, each centered on an optical channel so as to extract it from the multiplex. As demultiplexed in this way, each optical channel can be subjected to processing in an optical or opto-electronic component such as an amplifier, a dispersion compensator, etc.

Figure 1 also shows a device for measuring the optical power of the ALC load channel, which device is constituted by three photodiodes 160 distributed on the channel 101 reserved for the ALC load channel and the two channels 102, 103 adjacent to the load channel. Each of these photodiodes is adapted to measure the optical power in the channel in question; the measured powers are then added together 161, and the total power of the ALC load channel after demultiplexing is delivered to a controller 151.

The device 160 for measuring the optical power of the ALC load channel is designed to measure optical power over a spectral band of width greater than that of the spectral band of the filter. In particular, in the example of Figure 1, the optical power is measured over three channels centered on the channel for conveying the ALC signal, whereas the filter characteristic is generally centered on one channel and presents a width that is narrower than twice the spectral interval between two adjacent channels.

Figure 1 also shows a device 150 for adjusting the power of the ALC load channel. This adjustment can be performed using a variable optical attenuator VOA of known type. According to the invention, the VOA is not only controlled and adjusted by a feedback loop on the basis of the power at the output from the amplifier stage, in conventional manner, but the VOA is also controlled and adjusted on the ALC channel on the basis of the optical power of the ALC signal as measured prior to filtering, as described above, in order to compensate for the power lost from the load channel on passing through the filter device. The controller 151 of the VOA 150 thus receives a value for the optical power of the ALC channel as measured prior to filtering and a value of the optical power of the ALC channel as measured after the attenuation applied by the VOA. These two power values enable the power of the ALC channel to be adjusted optimally for compensating any loss of power due to the filtering of the ALC enlarged by non-linear effects or subjected to frequency drift, so as to ensure optimum power for the ALC channel.

Although not shown, the power of the load channel prior to filtering can be estimated from the measurement of a single photodiode 160 placed on the channel 101 reserved for the load channel, rather than from three photodiodes. Since the non-linear effects can be predicted, it is possible to apply a correction factor so that the control 151 of the variable optical attenuator 150 takes account of the widening of the spectrum of the load channel. For example, if the power of the ALC load channel, as measured by the single photodiode of the channel 101, is -10 decibels relative to 1 milliwatt (dBm), the ALC signal is weak it and will therefore not be widened by non-linear effects; no particular correction needs to be performed by the VOA controller 151. In contrast, if the power of the ALC load channel as measured by the single photodiode of the channel 101 is +10 dBm, it is known that the ALC load channel will be subjected to non-linear effects and it is possible to deduce therefrom the extent to which the spectrum will be widened and thus the losses induced by the filtering on passing through the demultiplexer. The variable optical attenuator VOA is then controlled so as to compensate for this additional loss, e.g. of 0.5 dBm. This solution is less accurate than that shown in Figure 1, since it does not make it possible to take account of any frequency drift of the laser emitting the ALC load channel, but it is less expensive and easier to implement.

Figure 2 shows another embodiment of the device of the invention for adjusting gain. The same elements, or optical components, are given the same reference numerals as in Figure 1.

In Figure 2, the device for measuring the optical power of the ALC load channel is constituted by an optical spectrum monitor 180. Such a spectrum monitor 180 is adapted to measure the distribution of the optical power propagating over all of the received multiplex; the measurement is thus performed prior to demultiplexing. A power measured over a given spectral band centered on the ALC load channel is delivered to a controller 151. The use of a spectrum monitor 180 is more accurate than measuring power on the basis of three (or more) photodiodes 160; but more expensive. The spectrum monitor 180 is designed to deliver to the controller 151 at least one measurement of the optical power over a spectral band that is wider than the spectral band of the filter and that is centered on the ALC channel.

In the embodiment of Figure 2, the device 150 for adjusting the power of the ALC load channel is likewise a variable optical attenuator VOA; the feedback loop of the VOA receives input data not only concerning the optical power of the ALC channel as measured after attenuation, but also the optical power of the ALC signal as measured prior to filtering, as mentioned above. Power can be measured in the feedback loop of the VOA with a photodiode 170 placed at the outlet from the VOA, as shown in Figures 1 and 2. In the embodiment of Figure 2, it is also possible to measure power in the feedback loop of the VOA with the spectrum monitor 180 which can measure in alternation the distribution of optical power both upstream from the demultiplexer 10 and downstream from the multiplexer 20, with the alternation being under the control of a known optical switch. The spectrum monitor 180 can thus deliver to the controller 151 of the VOA 150 a value for the optical power of the ALC channel as measured before filtering and a value for the optical power of the ALC channel as measured after attenuation and feedback. These two power values enable the power of the ALC channel to be adjusted optimally for compensating the appearance of non-linear effects.

The graph of Figure 3 is a diagram showing the effects of filtering and of the adjustment in accordance with the invention on the power of the ALC load channel. The graph of Figure 3 shows the spectral distribution of the effective power in dBm on the ALC load channel. The optical signal on the ALC load channel is emitted by a laser at a given wavelength allocated to a channel N of the multiplex. The adjacent channels N-1 and N+1 are generally reserved, i.e. no "working" optical signal is emitted at the wavelengths allocated to these adjacent channels. As explained above, the optical signal of the load channel can reach a very high power level that exceeds the power threshold NL above which non-linear effects appear. These non-linear effects have in particular the consequence of widening the spectrum of the load channel so that it impinges on the adjacent channels - as represented by the dashed line spectrum in Figure 3. In addition, if the power of the load channel is much greater than that of the other channels in the multiplex, even with a demultiplexer that is highly selective, it is possible that a portion of the ALC load channel is to be found in the adjacent channels.

When such an ALC channel with widened spectrum penetrates into a bandpass filter upstream from an optical component in an optical node of the WDM line, the filter eliminates the side portions of the spectrum that lie outside the characteristic imposed by the filter. A fraction of the power of the ALC channel signal is thus retained by the filter (shaded zone in Figure 3). The total power of the multiplex is thus less than a given nominal power value, in spite of the fact the function of the ALC channel is specifically to keep the total power of the multiplex constant.

In the invention, the power of the ALC load channel is measured prior to filtering over a spectral band that is wider than the spectral band of the filter; i.e. the power of the ALC channel is measured at least over the channel N plus the channels N-1 and N+1, using photodiodes or an OSM, or else it is estimated on the basis of the measurement performed on the channel N. This measurement of the power of the ALC load channel prior to filtering then makes it possible to adjust the attenuation of the power of the ALC channel. The ALC channel, like all of the other channels of the multiplex, is amplified in an amplifier stage, potentially of fixed gain, and is then subjected to variable attenuation in order to compensate for the distortions of amplification between the channels. In the invention, measuring the power of the ALC channel prior to filtering enables the attenuation of the power of the ALC channel by the VOA to be adjusted, and in particular it enables the attenuation of the power on the channel N to be compensated so as to recover the power lost on the channels N-1 and N+1 due to the filtering. The spectrum of the ALC channel is thus refined by the gain adjustment device of the invention so as to guarantee controlled power and spectral width in the ALC channel in order to avoid over-spill and in order to keep the total power of the multiplex constant.

The device of the invention for adjusting the gain of an ALC load channel is for use in an optical system comprising a WDM optical transmission line adapted to convey a multiplex of wavelength multiplexed optical signals, and at least one optical node. The optical node comprises at least one optical component for processing the signals of the multiplex, e.g. an optical amplifier, a chromatic dispersion compensator, an add-and-drop optical multiplexer, etc. The optical node further comprises an optical device for adjusting the gain of the ALC load channel conveyed in the multiplex as described above. The device for adjusting the gain of the load channel may optionally be integrated in the optical component for processing the demultiplexed signals, for example it may be integrated in a monolithic component having channel filtering and adjustment functions, such as a demultiplexer coupled to a multiplexer, or more simply by placing a variable optical attenuator (VOA) in the optical add-and-drop multiplexer (OADM).

The invention thus makes it possible to adjust gain in a wavelength multiplexed optical transmission system. A multiplex of optical signals is conveyed in a WDM optical transmission line, the multiplex including a plurality of "working" channels for conveying optical signals, plus at least one additional load channel for automatic level control. The multiplex is subjected to optical processing in an optical node of the transmission line. When that happens, the optical channels are demultiplexed, processed, and multiplexed for forwarding a modified multiplex downstream from the node in the transmission line. The optical channels are filtered by the demultiplexer. In the invention, the optical power of the ALC load channel is measured prior to filtering using photodiodes or an optical spectrum monitor or using any other appropriate means depending on the embodiment implemented. The power of the ALC load channel is then adjusted as a function of the power measured prior to filtering in order to compensate for the loss of power from the load channel during filtering.

Naturally, the present invention is not limited to the embodiments described by way of example with reference to the figures; in particular, although the invention is shown with a variable optical attenuator VOA as the device for adjusting the power of the ALC load channel, it should be understood that any means suitable for adjusting the power of a channel of the multiplex can be used within the ambit of the present invention, such as preamplifying certain channels when emitting the optical signal, or using filters of the arrayed waveguide grating (AWG) type, Bragg gratings, or any optical component of the microelectromechanical system (MEMS) type.

## Claims

1. An optical device for adjusting the gain of an ALC load channel (101) conveyed in a multiplex (100) over a transmission line by wavelength division multiplexing (WDM), the gain adjustment device comprising :
. a demultiplexer device (10) having a filter device and adapted to receive a multiplex (100), and a multiplexer device (20) adapted to forward a modified multiplex (100') into the transmission line ;
. a measurement device (160) for measuring the optical power of the ALC load channel (101) and adapted to estimate optical power prior to filtering over a spectral band that is wider than the spectral band of the passband filter centered on each demultiplexed channel ; and
. a device (150) for adjusting the power of the ALC load channel between the demultiplexer device (10) and the multiplexer device (20), the power adjustment device (150) being controlled to compensate for the loss of power from the load channel (101) on passing through the filter device.

2. An optical device according to claim 1, in which she device for measuring the optical power or the ALC load channel (101) comprises at least one photodiode (160) placed on the ALC load channel (101).

3. An optical device according to claim 2, in which the device for measuring the optical power of the ALC load channel (101) comprises at least three photodiodes (160) placed on ALC load channel (101) and on the two channels (102, 103) adjacent to the load channel.

4. An optical device according to claim 1, in which the device for measuring the optical power of the ALC load channel (101) comprises an optical spectrum analyzer (OSM) (180) adapted to measure the spectral distribution of power in the received multiplex.

5. An optical device according to any one of claims 1 to 4, in which the demultiplexer device (10) comprises a bandpass filter applied to each channel for demultiplexing.

6. An optical device according to any one of claims 1 to 5, in which the device (150) for adjusting the power of the ALC load channel comprises a variable optical attenuator (VOA) (151).

7. An optical system comprising :
. a WDM optical transmission line for conveying a wavelength division multiplex (100) of optical signals, the multiplex (100) comprising a plurality of channels (102, 103) for conveying optical signals and at least one additional load channel (101) for automatic level control; and
. at least one optical node including at least one optical component for processing the signal of the multiplex and an optical device for adjusting the gain of the ALC load channel conveyed in the multiplex and in accordance with any one of claims 1 to 6.

8. An optical system according to claim 7, in which the optical component for processing the signals of the multiplex in the optical node is selected from one (or more) optical amplifier(s); one (or more) optical attenuator(s); one (or more) optical filter (s) ; a chromatic dispersion compensator; and an add-and-drop optical multiplexer.

9. An optical system according to claim 7 or claim 8, in which the optical device (150) for adjusting the gain of the ALC load channel (101) is integrated in the optical component for processing the signals of the multiplex (100).

10. A method of adjusting gain in a wavelength division multiplex optical transmission system, the method comprising the steps of :
. transmitting a multiplex (100) of wavelength division multiplexes optical signals, the multiplex (100) comprising a plurality of channels (102, 103) conveying optical signals and at least one additional load channel (101) for automatic level control ;
. demultiplexing said multiplex (100),
. generating a modified multiplex (100') and forwarding the modified multiplex (100') into a transmission line ;
. measuring or estimating the optical power of the ALC load channel (101) prior to demultiplexing over a spectral band that is wilder than the spectral band of the passband filter centered on each demultiplexed channel ; and
. adjusting as part of the step of generating a modified multiplex (100') the powder of the demultiplexed ALC load channel (101) as a function of the power as measured or estimated prior to demultiplexing.

11. A method of adjusting gain according to claim 10, in which the optical power of the ALC load channel prior to filtering is estimated after demultiplexing by measuring the optical power of the load channel.

12. A method of adjusting gain according to claim 11, in which the optical power of the ALC load channel is estimated after demultiplexing by measuring the optical power of the load channel (101) and of the two channels (102, 103) adjacent to the load channel.

13. A method of adjusting gain according to claim 10, in which the optical power of the ALC load channel is measured prior to demultiplexing by measuring the spectral distribution of power with an optical spectrum analyzer (OSM).

14. A method of adjusting gain according to any one of claims 10 to 13, in which the power of the ALC load channel is adjusted by variable attenuation of the power of said a channel.

## Patentansprüche

1. Eine optische Vorrichtung zum Anpassen der Verstärkung in einem Multiplex (100) über eine Übertragungsleitung durch Wellenlängenmultiplex (WDM) beförderten ALC-Lastkanals (101), wobei die Vorrichtung zur Verstärkungsanpassung umfasst:
- Eine Demultiplex-Vorrichtung (10) mit einer Filtervorrichtung und ausgelegt, um einen Multiplex (100) zu empfangen, und Multiplex-Vorrichtung (20), welche ausgelegt ist, um ein modifiziertes Multiplex (100') an eine Übertragungsleitung weiterzuleiten;
- eine Messvorrichtung (160) zum Messen der optischen Leistung des ALC-Lastkanals (101), und ausgelegt, um die optische Leistung vor dem Filtern über ein Spektralband, welches breiter ist als das Spektralband des Passbandfilters, welcher auf jedem demultiplexten Kanal zentriert ist, zu schätzen; und
- eine Vorrichtung (150) zum Anpassen der Leistung des ALC-Lastkanals zwischen der Demultiplex-Vorrichtung (10) und der Multiplex-Vorrichtung (20), wobei die Leistungsanpassungsvorrichtung (150) eingestellt wird, um den Leistungsverlust von dem Lastkanal (101) bei dem Durchlaufen der Filtervorrichtung zu kompensieren.

2. Eine optische Vorrichtung nach Anspruch 1, wobei die Vorrichtung zum Messen der optischen Leistung des ALC-Lastkanals (101) mindestens eine auf dem ALC-Lastkanal (101) angeordnete Fotodiode (160) umfasst.

3. Eine optische Vorrichtung nach Anspruch 2, wobei die Vorrichtung zum Messen der optischen Leistung des ALC-Lastkanals (101) mindestens drei auf dem ALC-Lastkanal (101) und auf den zwei Kanälen (102, 103), welche an den Lastkanal angrenzen, angeordnete Fotodioden (160) umfasst.

4. Eine optische Vorrichtung nach Anspruch 1, wobei die Vorrichtung zum Messen der optischen Leistung des ALC-Lastkanals (10) optischen Spektrumanalysator (OSM) (180) umfasst, welcher ausgelegt ist, um die der Leistung in dem empfangenen Multiplex zu messen.

5. Eine optische Vorrichtung nach einem beliebigen der Ansprüche 1 bis 4, wobei die Demultiplex-Vorrichtung (10) einen auf jeden Kanal für das Demultiplex angewendeten Passbandfilter umfasst.

6. Eine optische Vorrichtung nach einem beliebigen der Ansprüche 1 bis 5, wobei die Vorrichtung (150) zum Anpassen der Leistung des ALC-Lastkanals einen variablen optischen (VOA) (151) umfasst.

7. Ein optisches System, umfassend:
. Eine optische WDM-Übertragungsleitung zum Befördern eines Wellenlängen-Multiplex (100) von signalen, wobei das Multiplex (100) eine Vielzahl von Kanälen (102, 103) zum Befördern von optischen Signalen, sowie mindestens einen zusätzlichen Lastkanal (101) für die automatische Pegeleinstellung umfasst; und
. mindestens einen optischen Knoten mit mindestens einer optischen Komponente zum Verarbeiten der Signale des Multiplex, und einer optischen Vorrichtung zum Anpassen der Verstärkung des in dem beförderten ALC-Lastkanals gemäß einem beliebigen der Ansprüche 1 bis 6.

8. Ein optisches System nach Anspruch 7, wobei die optische Komponente zum Verarbeiten der Signale des Multiplex in dem optischen Knoten unter einem (oder mehreren) optischen Verstärkern, einem (oder mehreren) optischen Dämpfern: einem mehreren) Filtern; einer Vorrichtung zum Kompensieren chromatischer Dispersion; und einem optischen Add/Drop-Multiplexer ausgewählt wird.

9. Ein optisches System nach Anspruch 7 oder 8, wobei die optische Vorrichtung (150) zum Anpassen der Verstärkung des ALC-Lastkanals (101) in der optischen Komponente zum Verarbeiten der Signale des Multiplex (100) integriert ist.

10. Ein zum Anpassen der Verstärkung in einem optischen Wellenlängen multiplex-Übertragungssystem, wobei das Verfahren die folgenden Schritte umfasst:
. Übertragen eines Multiplex (100) von wellenlängengemultiplexten optischen Signalen, wobei das Multiplex (100) eine von Kanälen (102, 103), welche optische Signale befördern, und mindestens einen zusätzlichen Lastkanal (101) für die automatische Pegeleinstellung umfasst;
. des besagten Multiplex (100), wobei ein modifiziertes Multiplex (100') erzeugt wird, und des modifizierten Multiplex (100') an eine Übertragungsleitung;
. Messen oder Schätzen der optischen Leistung des ALC-Lastkanals (101) vor dem Demultiplexen über ein Spektralband, welches breiter ist als das des auf jedem demultiplexten Kanal zentrierten Passbandfilters; und
- Anpassen, als des Schrittes des Erzeugens eines modifizierten Multiplex (100'), der Leistung des demultiplexten ALC-Lastkanals (101) als eine Funktion der vor dem Demultiplexen gemessenen oder geschätzten Leistung.

11. Ein Verfahren zum Anpassen der Verstärkung nach Anspruch 10, wobei die optische Leistung des ALC-Lastkanals vor dem Filtern nach dem Demultiplexen durch Messen der optischen Leistung des Lastkanals geschätzt wird.

12. Ein Verfahren zum Anpassen der Verstärkung nach Anspruch 11, wobei die optische Leistung des ALC-Lastkanals nach dem Demultiplexen durch Messen der optischen Leistung des Lastkanals (101) und der beiden Kanäle (102,103), welche an den Lastkanal angrenzen, geschätzt wird.

13. Ein Verfahren zum Anpassen der Verstärkung nach Anspruch 10, wobei die optische Leistung des ALC-Lastkanals vor dem Demultiplexen durch Messen der Spektralverteilung der Leistung mit einem optischer Spektrumanalysator (OSM) gemessen wird.

14. Ein Verfahren zum Anpassen der Verstärkung nach einem beliebigen der Ansprüche 10 bis 13, wobei die Leistung des ALC-Lastkanals durch variable Dämpfung der Leistung des besagten Lastkanals angepasst wird.

## Revendications

1. Dispositif optique pour régler le gain d'un canal de charge ALC (101) transporté dans un canal multiplexé (100) sur une ligne de transmission par multiplexage par répartition en longueur d'onde (WDM), le dispositif de réglage du gain comprenant :
- un dispositif démultiplexeur (10) muni d'un dispositif de filtrage et adapté pour recevoir un canal multiplexé (100), et un dispositif multiplexeur (20) adapté pour transférer un canal multiplex modifié (100') sur la ligne de transmission ;
- un dispositif de mesure (160) pour mesurer la puissance optique du canal de charge TALC (101) et adapté pour estimer la puissance optique avant d'effectuer un filtrage sur une bande spectrale qui est plus large que la bande spectrale du filtre passe-bande centré sur chaque canal démultiplexé ; et
- un dispositif (150) pour régler la puissance du canal de charge ALC entre le Dispositif démultiplexeur (10) et le Dispositif multiplexeur (20), le Dispositif de réglage de la puissance (150) étant commandé de manière à compenser la perte de puissance subie par le canal de charge (101) lorsqu'il passe à travers le dispositif de filtrage.

2. Dispositif optique selon la revendication 1, dans lequel le dispositif de mesure de la puissance optique du canal de charge ALC (101) comprend au moins une photodiode (160) placés sur le canal de charge TALC (101).

3. Dispositif optique selon la revendication 2, dans lequel le dispositif de mesure de la puissance optique du canal de charge ALC (101) comprend au trois photodiodes (160) placées sur le canal de charge ALC (101) et sur les deux canaux (102, 103) voisins du canal de charge.

4. Dispositif optique selon la revendication 1, dans lequel le dispositif de mesure de la puissance optique du canal de charge ALC (101) comprend un analyseur de spectre optique (OSM) (180) adapté pour mesurer la distribution spectrale de puissance dans le canal multiplexé reçu.

5. Dispositif optique selon l'une quelconque des revendications 1 à 4, dans lequel le dispositif démultiplexeur (10) comprend un filtre passe-bande appliqué à chaque canal pour le démultiplexage.

6. Dispositif optique selon l'une quelconque des revendications 1 à 5, dans lequel le dispositif (150) de réglage de la puissance du canal de charge ALC comprend un atténuateur optique variable (VOA) (151).

7. Système optique, comprenant:
- une ligne de transmission optique WDM pour transporter un canal multiplexé par répartition en longueur d'onde (100) de signaux optiques, le canal multiplexé (100) comprenant une pluralité de canaux (102, 103) pour transporter signaux optiques et au moins un canal de charge supplémentaire (101) pour la commande automatique du niveau; et
- au moins un noeud optique comprenant au moins un composant optique pour traiter les signaux du canal multiplexé et un dispositif optique pour ajuster le gain du canal de charge ALC transporté dans le canal multiplexé et selon l'une quelconque des revendications 1 à 6.

8. Système optique selon la revendication 7, dans lequel le composant optique de traitement des signaux du canal multiplexé dans le noeud optique est sélectionné parmi les suivants : un (ou plusieurs) amplificateurs(s) optique(s) ; un (ou plusieurs) atténuateur(s) optique(s) un (ou plusieurs) filtre(s) optique(s) ; un compensateur de dispersion chromatique ; et un multiplexeur optique d'insertion/extraction.

9. Système optique selon la revendication 7 ou la revendication 8, dans lequel le Dispositif optique (150) de réglage du gain canal de charge ALC (101) est intégré dans le composant optique de traitement des signaux du canal multiplexé (100).

10. Procédé de réglage du gain dans un système de transmission optique à multiplexage par répartition en longueur d'onde, le procédé comprenant les étapes suivante :
- transmission d'un canal multiplexé (100) contenant des signaux optiques multiplexés par répartition en longueur d'onde, le canal multiplexé (100) comprenant une pluralité de canaux (102, 103) qui transportent des signaux optiques et au moins un canal de charge supplémentaire (101) pour la commandé automatique du niveau ;
- démultiplexage dudit canal multiplexé (100), génération d'un canal multiplexé modifié (100') et transfert du canal multiplexé modifié (100') sur une ligne de transmission ;
- mesure ou estimation de la puissance optique du canal de charge ALC (101) avant d'effectuer un démultiplexage sur une bande spectrale qui est plus large que la bande spectrale du filtre passe-bande centré sur chaque canal démultiplexé ; et
- réglage, dans le cadre de l'étape de génération d'un canal multiplexé modifié (100'), de la puissance du canal de charge ALC démultiplexé (101) en fonction de la puissance mesurée ou estimée avant le démultiplexage.

11. Procédé de réglage du gain selon revendication 1 , dans lequel la puissance optique du canal de charge ALC avant le filtrage est estimée après le démultiplexage en mesurant la puissance optique du canal de charge.

12. Procédé de réglage du gain selon la revendication 11, dans lequel la puissance optique du canal de charge ALC est estimée après le démultiplexage en mesurant la puissance optique canal chargé (10) et des deux canaux (102, 103) voisins du canal de charge.

13. Procédé de réglage du gain selon la revendication 10, dans lequel la puissance optique du canal de charge ALC est mesurée avant le démultiplexage en mesurant la distribution spectrale de la puissance un analyseur de spectre optique (OSM).

14. Procédé de réglage du gain selon l'une quelconque des revendications 10 à 13, dans lequel la puissance du canal de charge ALC réglée par une atténuation variable de la puissance dudit canal de charge.
